# EUROPEAN PATENT APPLICATION

(11) **EP 4 525 487 A1**
(43) Date of publication of application: **19.03.2025**
(21) Application number: 22941119.4
(22) Date of filing: 11.05.2022
(51) Int. Cl.: H04W 4/02

(54) **METHOD AND APPARATUS FOR TRANSMITTING MEASUREMENT CAPABILITY OF USER EQUIPMENT, AND READABLE STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2022/092301
(87) International publication number: WO 2023/216161

(57) **Abstract**

Provided in the present disclosure are a method and apparatus for transmitting a measurement capability transmission of a user equipment, and a readable storage medium, which are applied to the technical field of wireless communications. The method comprises a user equipment sending measurement capability information of the user equipment to a network device, wherein the measurement capability information of the user equipment is used for indicating whether a first capability is supported, and the first capability is to measure satellite positioning information in a radio resource control (RRC) connected state. In the present disclosure, a user equipment reports the measurement capability information of the user equipment to a network device to indicate whether the capability of measuring satellite positioning information in an RRC connected state is supported, and after learning whether the user equipment has the capability, the network device enables, according to different situations, the user equipment to use the capability thereof, thereby avoiding the situation of connection interruption caused by returning to an RRC idle state to measure satellite positioning information even when the capability is supported, and improving the resource utilization rate and network performance.

## Description

### TECHNICAL FIELD

The present disclosure relates to wireless communication technology, and in particular to a method and apparatus for user equipment measurement capability transmission, and a readable storage medium.

### BACKGROUND

In some wireless communication systems, user equipment (UE) can measure satellite positioning information only when the UE is in a radio resource control (RRC) idle state. In this case, it is necessary to further improve the control process of the user equipment measuring the satellite positioning information.

### SUMMARY

The present disclosure provides a method and apparatus for user equipment measurement capability transmission, and a readable storage medium.

In a first aspect, a method for user equipment measurement capability transmission is provided. The method is performed by a user equipment, and includes:
sending user equipment measurement capability information to a network device, in which the user equipment measurement capability information is used for indicating whether a first capability is supported, and the first capability is: measuring satellite positioning information in a radio resource control (RRC) connected state.

In some possible implementations, the method further includes:
sending a message for triggering an entry into an RRC idle state to the network device in response to the user equipment measurement capability information indicating that the first capability is not supported, and measuring satellite positioning information in the RRC idle state.

In some possible implementations, the message for triggering the entry into the RRC idle state is a radio link failure message; the method further includes: sending an RRC reconnection request to the network device after measuring the satellite positioning information in the RRC idle state.

In some possible implementations, the message for triggering the entry into the RRC idle state is an RRC connection release request; the method further includes: sending an RRC connection establishment request to the network device after measuring the satellite positioning information in the RRC idle state.

In some possible implementations, the method further includes:
sending configuration information required for measuring the satellite positioning information to the network device in response to the user equipment measurement capability information indicating that the first capability is supported, in which the configuration information required for measuring the satellite positioning information includes at least one of:
a duration for measuring the satellite positioning information, a measurement repetition period for measuring the satellite positioning information, or an offset of a measurement start time point for measuring the satellite positioning information.

In some possible implementations, the method further includes: receiving measurement gap configuration information sent by the network device, in which a measurement gap indicated by the measurement gap configuration information satisfies the configuration information required for measuring the satellite positioning information; and measuring the satellite positioning information within the measurement gap indicated by the measurement gap configuration information.

In some possible implementations, the method further includes: receiving discontinuous reception configuration information sent by the network device, in which an off period indicated by the discontinuous reception configuration information satisfies the configuration information required for measuring the satellite positioning information; and measuring the satellite positioning information during the off period indicated by the discontinuous reception configuration information.

In a second aspect, a method for measuring satellite positioning information is provided. The method is performed by a network device, and includes:
receiving user equipment measurement capability information sent by a user equipment, in which the user equipment measurement capability information is used for indicating whether a first capability is supported, and the first capability is: measuring satellite positioning information in a radio resource control (RRC) connected state.

In some possible implementations, the method further includes: receiving a message sent by the user equipment for triggering an entry into an RRC idle state in response to the user equipment measurement capability information indicating that the first capability is not supported.

In some possible implementations, the message for triggering the entry into the RRC idle state is a radio link failure message; and the method further includes: receiving an RRC reconnection request.

In some possible implementations, the message for triggering the entry into the RRC idle state is an RRC connection release request; the method further includes: receiving an RRC connection establishment request sent by the user equipment.

In some possible implementations, the method further includes: receiving configuration information required for measuring the satellite positioning information that is sent by the user equipment in response to the user equipment measurement capability information indicating that the first capability is supported, in which the configuration information required for measuring the satellite positioning information includes at least one of:
a duration for measuring the satellite positioning information, a measurement repetition period for measuring the satellite positioning information, or an offset of a measurement start time point for measuring the satellite positioning information.

In some possible implementations, the method further includes: receiving measurement gap configuration information sent by the user equipment, in which a measurement gap indicated by the measurement gap configuration information satisfies the configuration information required for measuring the satellite positioning information.

In some possible implementations, the method further includes: receiving discontinuous reception configuration information sent by the user equipment, in which an off period indicated by the measurement gap configuration information satisfies the configuration information required for measuring the satellite positioning information.

In a third aspect, a communication apparatus is provided. The communication apparatus may be used to execute the steps performed by a user equipment in the first aspect or any possible design of the first aspect. The user equipment may implement the functions in the above methods in the form of a hardware structure, a software module, or a hardware structure plus a software module.

When the communication apparatus shown in the first aspect is implemented by a software module, the communication apparatus may include a transceiver module.

The transceiver module is configured to send user equipment measurement capability information to a network device, in which the user equipment measurement capability information is used for indicating whether a first capability is supported, and the first capability is: measuring satellite positioning information in a radio resource control (RRC) connected state.

In a fourth aspect, a communication apparatus is provided. The communication apparatus can be used to execute the steps performed by the network device in the second aspect or any possible design of the second aspect. The network device can implement the functions of the above methods in the form of hardware structure, software module, or hardware structure plus software module.

When the communication apparatus shown in the second aspect is implemented by a software module, the communication apparatus may include a transceiver module.

The transceiver module is configured to receive user equipment measurement capability information sent by a user equipment, in which the user equipment measurement capability information is used for indicating whether a first capability is supported, and the first capability is: measuring satellite positioning information in a radio resource control (RRC) connected state.

In a fifth aspect, a communication apparatus is provided. The communication apparatus includes a processor and a memory; the memory is configured to store a computer program; the processor is configured to execute the computer program to implement the first aspect or any possible design of the first aspect.

In a sixth aspect, a communication apparatus is provided. The communication apparatus includes a processor and a memory; the memory is configured to store a computer program; the processor is configured to execute the computer program to implement the second aspect or any possible design of the second aspect.

In a seventh aspect, a computer-readable storage medium is provided, in which instructions (or a computer programs, a program) are stored in the computer-readable storage medium, and the instructions, when called and executed by a computer, cause the computer to execute the above-mentioned first aspect or any possible design of the first aspect.

In an eighth aspect, a computer-readable storage medium is provided, in which instructions (or a computer programs, a program) are stored in the computer-readable storage medium, and the instructions, when called and executed by a computer, cause the computer to execute the above-mentioned second aspect or any possible design of the second aspect.

In the embodiments of the present disclosure, user equipment reports user equipment measurement capability information to a network device to indicate whether the user equipment supports the capability to measure satellite positioning information in the radio resource control (RRC) connected state. After learning whether the user equipment has this capability, the network device causes the user equipment to apply its capability according to different situations, so as to avoid the connection interruption due to returning to the RRC idle state to measure satellite positioning information in the case that this capability is supported, thereby improving resource utilization and network performance.

It is to be understood that the foregoing general description and the following detailed description are exemplary and explanatory only, and are not meant to limit the present disclosure.

### BRIEF DESCRIPTION OF THE DRAWINGS

The drawings described herein are used to provide a further understanding of the embodiments of the present disclosure and constitute a part of this application. The illustrative examples of the embodiments of the present disclosure and their descriptions are used to explain the embodiments of the present disclosure and do not constitute an undue limitation on the embodiments of the present disclosure.

The accompanying drawings herein are incorporated in and constitute a part of the specification, illustrate examples consistent with the embodiments of the present disclosure, and together with the description, serve to explain the principles of the embodiments of the present disclosure.
Fig. 1 is a schematic diagram of an architecture of a wireless communication system according to an embodiment of the present disclosure;
Fig. 2 is a schematic diagram showing a method for user equipment measurement capability transmission according to an exemplary embodiment;
Fig. 3 is a schematic diagram showing another method for user equipment measurement capability transmission according to an exemplary embodiment;
Fig. 4 is a schematic diagram showing another method for user equipment measurement capability transmission according to an exemplary embodiment;
Fig. 5 is a schematic diagram showing a method for sending a user equipment measurement capability according to an exemplary embodiment;
Fig. 6 is a schematic diagram showing a method for receiving a user equipment measurement capability according to an exemplary embodiment;
Fig. 7 is a structural diagram of an apparatus for sending a user equipment capability according to an exemplary embodiment;
Fig. 8 is another structural diagram of an apparatus for sending a user equipment capability according to an exemplary embodiment;
Fig. 9 is another structural diagram of an apparatus for receiving a user equipment capability according to an exemplary embodiment;
Fig. 10 is another structural diagram of an apparatus for receiving a user equipment capability according to an exemplary embodiment.

### DETAILED DESCRIPTION

The embodiments of the present disclosure are now further described in conjunction with the accompanying drawings and specific implementations.

Exemplary embodiments will be described in detail herein, examples of which are shown in the accompanying drawings. When the following description refers to the drawings, the same numbers in different drawings represent the same or similar elements unless otherwise indicated. The implementations described in the following exemplary embodiments do not represent all implementations consistent with the embodiments of the present disclosure. Instead, they are merely examples of apparatuses and methods consistent with some aspects of the present disclosure as detailed in the appended claims.

The terms used in the embodiments of the present disclosure are only for the purpose of describing specific embodiments and are not intended to limit the embodiments of the present disclosure. The singular forms: "a", "an" and "the", used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, these information should not be limited by these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "in a case that" or "when" or "in response to determining".

The embodiments of the present disclosure are described in detail below, and examples of the embodiments are shown in the accompanying drawings, in which the same or similar reference numerals represent the same or similar elements throughout the drawings. The embodiments described below with reference to the accompanying drawings are exemplary, and are intended to be used to explain the present disclosure, and cannot be understood as limiting the present disclosure.

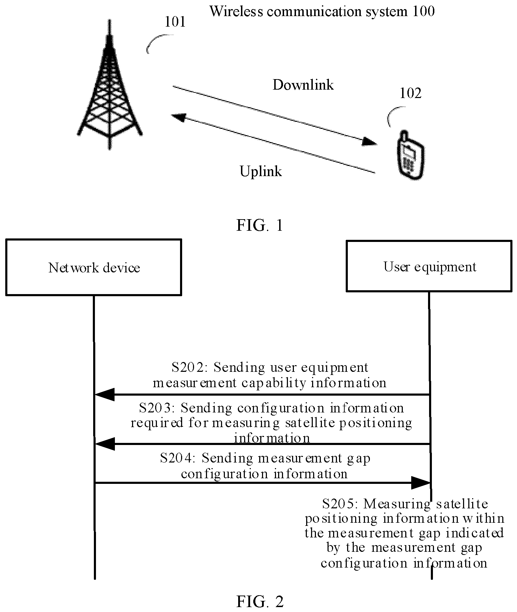

As shown in Fig. 1, an embodiment of the present disclosure provides a method for user equipment measurement capability transmission. The method may be applied to a wireless communication system 100, which may include but is not limited to a network device 101 and a user equipment 102. The user equipment 102 is configured to support carrier aggregation, and the user equipment 102 may be connected to multiple component carriers of the network device 101, the multiple component carriers including a primary component carrier and one or more secondary component carriers.

It should be understood that the above wireless communication system 100 can be applied to both low-frequency scenarios and high-frequency scenarios. Application scenarios of the wireless communication system 100 include, but are not limited to, long term evolution (LTE) systems, LTE frequency division duplex (FDD) systems, LTE time division duplex (TDD) systems, worldwide interoperability for micro wave access (WiMAX) communication systems, cloud radio access network (CRAN) systems, future fifth-generation (5G) systems, new radio (NR) communication systems, or future evolved public land mobile network (PLMN) systems.

The user equipment 102 shown above may be a user equipment (UE), a terminal, an access terminal, a terminal unit, a terminal station, a mobile station (MS), a remote station, a remote terminal, a mobile terminal, a wireless communication device, a terminal agent or a user device, etc. The user equipment 102 may have a wireless transceiver function, and may communicate (such as wireless communication) with one or more network devices 101 of one or more communication systems, and receive network services provided by the one or more network devices 101, where the network device 101 includes but is not limited to the base station shown in the drawing.

The user equipment 102 may be a cellular phone, a cordless phone, a session initiation protocol (SIP) phone, a wireless local loop (WLL) station, a personal digital assistant (PDA) device, a handheld device with wireless communication capabilities, a computing device or other processing device connected to a wireless modem, an in-vehicle device, a wearable device, a user equipment in a future 5G network, or a user equipment in a future evolved PLMN network, etc.

The network device 101 may be an access network device (or access network node). The access network device refers to a device that provides network access functions, such as a radio access network (RAN) base station. The network device may specifically include a base station (BS) device, or include a base station device and a wireless resource management device for controlling the base station device, etc. The network device may also include a relay station (relay device), an access point, a base station in a future 5G network, a base station in a future evolved PLMN network, or an NR base station, etc. The network device may be a wearable device or an in-vehicle device. The network device may also be a communication chip with a communication module.

For example, the network device 101 includes but is not limited to: a next generation base station (gnodeB, gNB) in 5G, an evolved node B (eNB) in the LTE system, a radio network controller (RNC), a node B (NB) in the wideband code division multiple access (WCDMA) system, a wireless controller in the CRAN system, a base station controller (BSC), a base transceiver station (BTS) in the global system for mobile communications (GSM) system or the code division multiple access (CDMA) system, a home base station (for example, home evolved nodeB, or home node B, HNB), a baseband unit (BBU), a transmitting and receiving point (TRP), a transmitting point (TP) or a mobile switching center, etc.

In some wireless communication systems, the UE can only measure satellite positioning information in the RRC idle state. If a UE in the RRC connected state needs to measure satellite positioning information, it must switch from the RRC connected state to the RRC idle state to complete the measurement, and re-initiate a connection request after the measurement is completed to enter the RRC connected state. This will cause problems such as interruption and excessive delays, thereby impacting network efficiency and performance.

The embodiments of the present disclosure may be applied to, but are not limited to, Internet of Things (IoT) and non-terrestrial networks (NTN).

Embodiments of the present disclosure provide a method for user equipment capability transmission. Fig. 2 is a flow chart showing a method for user equipment capability transmission according to an exemplary embodiment. As shown in Fig. 2, the method specifically includes steps S202-S205.

In one example, measuring satellite positioning information is to measure positioning information of a Global Navigation Satellite System (GNSS).

Step S202: A user equipment sends user equipment measurement capability information to a network device.

The user equipment measurement capability information sent by the user equipment to the network device is used for indicating whether a first capability is supported, and the first capability is: measuring satellite positioning information in a radio resource control (RRC) connected state.

After receiving the user equipment measurement capability information, the network device can know whether the user equipment can measure satellite positioning information in the RRC connected state.

Step S203: The user equipment sends configuration information required for measuring satellite positioning information to the network device in response to the user equipment measurement capability information indicating that the first capability is supported (i.e., in response to the user equipment supporting the first capability).

The configuration information required for measuring satellite positioning information includes at least one of:
a duration for measuring the satellite positioning information, a measurement repetition period for measuring the satellite positioning information, or an offset of a measurement start time point for measuring the satellite positioning information.

Step S204: The network device sends measurement gap configuration information to the user equipment. A measurement gap indicated by this measurement gap configuration information satisfies the configuration information required for measuring the satellite positioning information. The measurement gap is used for the UE to perform GNSS measurement within the gap to obtain GNSS positioning information. In a possible implementation, the gap configuration information should include at least one of following parameters: the start point of the gap, the end point of the gap, and the length of the gap. In this way, illustratively, based on the start point of the gap and the length of the gap, the user equipment can know the relevant parameters of the gap in which measurement is performed. For the start point, the end point, or the length, it can be an absolute time point or a relative time point; for example, the start point can be an offset value relative to a reference time point, and the length of the gap can be an absolute time length (gap duration) or an offset value relative to a reference time point; similarly, the end point can also be an absolute time point or an offset value.

Step S205: The user equipment measures satellite positioning information within the measurement gap indicated by the measurement gap configuration information.

In another embodiment, the user equipment actively sends the user equipment measurement capability information to the network device at a fixed time or periodically. That is, the method includes: in response to the user equipment measurement capability information indicating that the first capability is supported (i.e., in response to the user equipment supporting the first capability), the user equipment sends satellite positioning information to the network device at a fixed time or periodically, in which the satellite positioning information is obtained by the user equipment through performing measurement. In a possible implementation, the method may also include: receiving trigger information sent by the network device, so as to send satellite positioning information to the network device at a fixed time or periodically according to the trigger information. In one implementation, the satellite positioning information is obtained by the user equipment through performing measurement at a fixed time or periodically. In another implementation, the satellite positioning information is sent to the network device at a fixed time or periodically after being measured by the user equipment; this scheme can be used exemplarily for the user equipment that does not move frequently. In embodiments of the present disclosure, the user equipment reports the user equipment measurement capability information to the network device to indicate whether the user equipment supports the capability to measure satellite positioning information in the radio resource control (RRC) connected state. After learning whether the user equipment has this capability, the network device causes the user equipment to apply the capability that the user equipment possesses according to different situations, so as to avoid the connection interruption due to returning to the RRC idle state to measure satellite positioning information in the case that this capability is supported, thereby improving resource utilization and network performance.

In the embodiments of the present disclosure, there may be multiple ways to trigger the user equipment to report the user equipment measurement capability information.

For example, the method may include:
Step S201: the network device sends a reporting notification message to the user equipment; in which the reporting notification message is used for instructing the user equipment to send user equipment measurement capability information to the network device; in which the user equipment measurement capability information is used for indicating whether a first capability is supported, and the first capability is: measuring satellite positioning information in a radio resource control (RRC) connected state.

For another example: the method may further include:
the user equipment reports the user equipment measurement capability information to the network device when a preset condition is met. The preset condition may be determined by a 3GPP communication protocol, or may be configured by the network device to the user equipment, or may be pre-stored in the user equipment. For example, the preset condition may be: actively sending it at a fixed time or periodically.

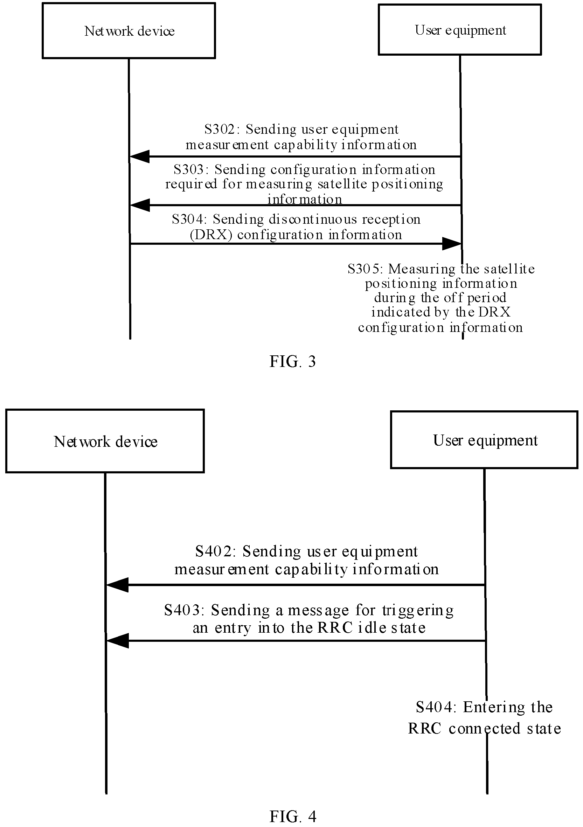

The embodiment of the present disclosure provides a method for user equipment capability transmission. Fig. 3 is a flow chart showing a method for user equipment capability transmission according to an exemplary embodiment. As shown in Fig. 3, the method specifically includes steps S302-S305.

Steps S302-S303 are the same as the steps S202-S203, respectively. In step S304, the network device sends discontinuous reception (DRX) configuration information to the user equipment. An off period indicated by the discontinuous reception (DRX) configuration information satisfies the configuration information required for measuring the satellite positioning information. The off period in the discontinuous reception (DRX) configuration information configured by the network device (DRX off period) is used for performing GNSS measurement to obtain GNSS positioning information. In step S305, the user equipment measures the satellite positioning information during the off period indicated by the discontinuous reception configuration information.

In embodiments of the present disclosure, the user equipment reports the user equipment measurement capability information to the network device to indicate whether the user equipment supports the capability to measure satellite positioning information in the radio resource control (RRC) connected state. After learning whether the user equipment has this capability, the network device causes the user equipment to apply its capability according to different situations, so as to avoid the connection interruption due to returning to the RRC idle state to measure satellite positioning information in the case that this capability is supported, thereby improving resource utilization and network performance.

Similar to the embodiment shown in Fig. 2, in the above embodiment of the present disclosure, there may be multiple ways to trigger the user equipment to report the user equipment measurement capability information.

For example, the method may include:
Step S301: The network device sends a reporting notification message to the user equipment; in which the reporting notification message is used for instructing the user equipment to send user equipment measurement capability information to the network device; in which the user equipment measurement capability information is used for indicating whether a first capability is supported, and the first capability is: measuring satellite positioning information in a radio resource control (RRC) connected state.

For another example: the method may further include: the user equipment reports the user equipment measurement capability information to the network device in a case that a preset condition is satisfied. The preset condition may be determined by a 3GPP communication protocol, or may be configured by the network device to the user equipment, or may be pre-stored in the user equipment. For example, the preset condition may be: actively sending it at a fixed time or periodically.

Embodiments of the present disclosure provide a method for user equipment capability transmission. Fig. 4 is a flow chart showing a method for user equipment capability transmission according to an exemplary embodiment. As shown in Fig. 4, the method specifically includes steps S402-S404.

Step S402: The user equipment sends user equipment measurement capability information to the network device, in which the user equipment measurement capability information is used for indicating whether the user equipment supports a first capability, and the first capability is: measuring satellite positioning information in a radio resource control (RRC) connected state.

After receiving the user equipment measurement capability information, the network device can know whether the user equipment can measure satellite positioning information in the RRC connected state.

Step S403: The user equipment sends a message for triggering an entry into the RRC idle state to the network device in response to the user equipment measurement capability information indicating that the first capability is not supported (i.e., in response to the user equipment not supporting the first capability), and measures satellite positioning information in the RRC idle state.

In the embodiment of the present disclosure, if the user equipment does not support the first capability, step S402 can be omitted, and step S403 is directly executed, in which the user equipment sends a message for triggering an entry into the RRC idle state to the network device, and measures the satellite positioning information in the RRC idle state. After sending the reporting notification information, if the network device receives the information sent by the user equipment for triggering the entry into the RRC idle state (the information may be a radio link failure (RLF) message), the network device considers that the user equipment does not support the first capability. In a step S404, the user equipment enters the RRC connected state.

Optionally, the message for triggering the entry into the RRC idle state in S403 is a radio link failure (RLF) message. After the measuring satellite positioning information in the RRC idle state is completed, an RRC reconnection request is sent to enter the RRC connected state.

Optionally, the message for triggering the entry into the RRC idle state in S403 is an RRC connection release request to directly disconnect the RRC connection. The user equipment enters the RRC idle state. After measuring the satellite positioning information in the RRC idle state is completed, an RRC connection establishment request is initiated to re-establish the RRC connection. After the RRC connection is re-established, the RRC connected state is entered.

In embodiments of the present disclosure, the user equipment reports the user equipment measurement capability information to the network device to indicate whether the user equipment supports the capability to measure satellite positioning information in the radio resource control (RRC) connected state. The user equipment interrupts the RRC connection only when it does not have this capability. Thus, the user equipment can apply its capability according to different situations, so as to avoid the connection interruption due to returning to the RRC idle state to measure satellite positioning information when this capability is supported, thereby improving resource utilization and network performance.

In the embodiments of the present disclosure, there may be multiple ways to trigger the user equipment to report the user equipment measurement capability information.

For example, the method may include:
Step S401: The network device sends a reporting notification message to the user equipment; in which the reporting notification message is used for instructing the user equipment to send user equipment measurement capability information to the network device; in which the user equipment measurement capability information is used for indicating whether a first capability is supported, and the first capability is: measuring satellite positioning information in a radio resource control (RRC) connected state.

For another example, the method may further include: the user equipment reports the user equipment measurement capability information to the network device in a case that a preset condition is met. The preset condition may be determined by a 3GPP communication protocol, or may be configured by the network device to the user equipment, or may be pre-stored in the user equipment. For example, the preset condition may be: actively sending it at a fixed time or periodically.

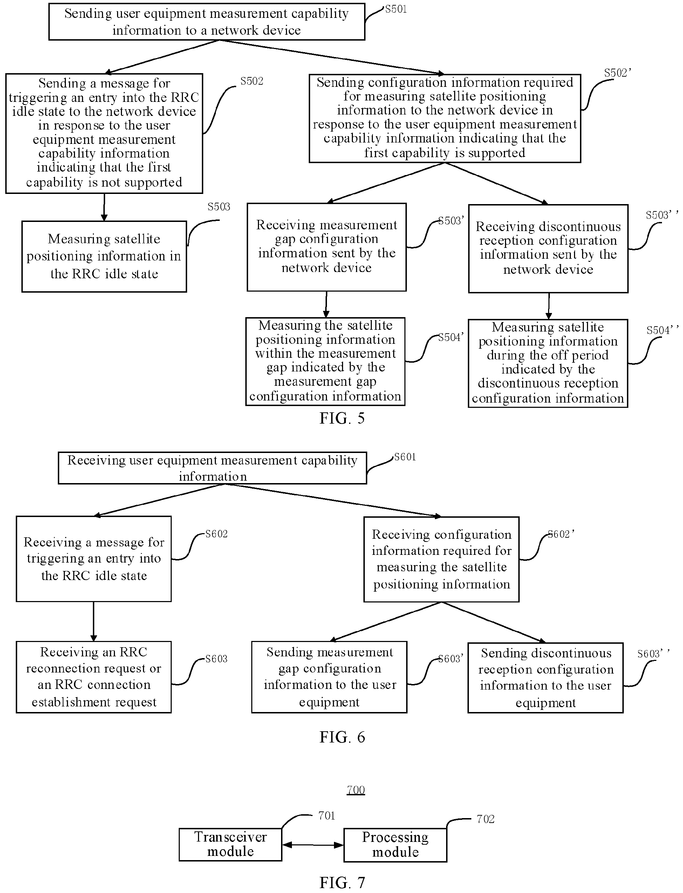

An embodiment of the present disclosure provides a method for sending a user equipment capability, which is performed by a user equipment. Fig. 5 is a flowchart showing a method for sending a user equipment capability according to an exemplary embodiment. As shown in Fig. 5, the method includes steps S501, S502, S503, S502', S503', S504', S503" and S504".

Step S501: User equipment measurement capability information is sent to a network device.

The user equipment measurement capability information is used for indicating whether a first capability is supported, and the first capability is: measuring satellite positioning information in a radio resource control (RRC) connected state.

In one example, measuring satellite positioning information is to measure GNSS positioning information.

Step S502: A message for triggering an entry into the RRC idle state is sent to the network device in response to the user equipment measurement capability information indicating that the first capability is not supported (i.e., in response to the user equipment not supporting the first capability).

Step S503: Satellite positioning information is measured in the RRC idle state.

In the embodiment of the present disclosure, if the user equipment does not support the first capability, the step S501 may be omitted in some possible implementations. That is, the step S502 is directly executed, in which the user equipment sends a message for triggering an entry into the RRC idle state to the network device, and measures satellite positioning information in the RRC idle state. If the network device receives the information sent by the user equipment for triggering the entry into the RRC idle state (the information may be a radio link failure (RLF) message), the network device considers that the user equipment does not support the first capability.

In some possible implementations, the message for triggering the entry into the RRC idle state in step S502 is a radio link failure (RLF) message; after step S503, the method further includes: sending an RRC reconnection request to the network device to enter the RRC connected state, and the process ends.

In some possible implementations, the message for triggering the entry into the RRC idle state in step S502 is an RRC connection release request; after step S503, the method further includes: sending a request to the network device to enter the RRC connected state, and the process ends.

Step S502': Configuration information required for measuring satellite positioning information is sent to the network device in response to the user equipment measurement capability information indicating that the first capability is supported (i.e., in response to the user equipment supporting the first capability).

The configuration information required for measuring satellite positioning information includes at least one of:
a duration for measuring the satellite positioning information, a measurement repetition period for measuring the satellite positioning information, or an offset of a measurement start time point for measuring the satellite positioning information.

Step S503': Measurement gap configuration information sent by the network device is received, in which a measurement gap indicated by the measurement gap configuration information satisfies the configuration information required for measuring the satellite positioning information.

Step S504': The satellite positioning information is measured within the measurement gap indicated by the measurement gap configuration information. The process ends.

The measurement gap is used for the UE to perform GNSS measurement within the gap to obtain GNSS positioning information. In a possible implementation, the gap configuration information should include at least one of following parameters: a start point of the gap, an end point of the gap, or a length of the gap. In this way, exemplarily, the user equipment can know, based on the start point of the gap and the length of the gap, the relevant parameters of the gap in which measurement is performed. For the start point, the end point, or the length, it can be an absolute time point or a relative time point; for example, the start point can be an offset value relative to a reference time point, and the length of the gap can be an absolute time length (gap duration) or an offset value relative to a reference time point; similarly, the end point can also be an absolute time point or an offset value.

Step S503": Discontinuous reception configuration information sent by the network device is received, in which the off period indicated by the discontinuous reception configuration information satisfies the configuration information required for measuring the satellite positioning information.

Step S504": Satellite positioning information is measured during the off period indicated by the discontinuous reception configuration information.

An embodiment of the present disclosure provides a method for receiving a user equipment capability, which is performed by a network device. Fig. 6 is a flow chart showing a method for receiving a user equipment capability according to an exemplary embodiment. As shown in Fig. 6, the method specifically includes steps S601-S604.

Step S601: Measurement capability information sent by a user equipment is received.

The user equipment measurement capability information is used for indicating whether a first capability is supported, and the first capability is: measuring satellite positioning information in a radio resource control (RRC) connected state.

Step S602: A message for triggering an entry into the RRC idle state is received.

Step S603: An RRC reconnection request or an RRC connection establishment request is received, and the process ends.

Optionally, the method includes steps S601, S602' and S603'.

Step S601: Measurement capability information sent by a user equipment is received.

The user equipment measurement capability information is used for indicating whether a first capability is supported, and the first capability is: measuring satellite positioning information in a radio resource control (RRC) connected state.

Step S602': Configuration information required for measuring the satellite positioning information is received.

The configuration information required for measuring satellite positioning information includes at least one of:
a duration for measuring the satellite positioning information, a measurement repetition period for measuring the satellite positioning information, or an offset of a measurement start time point for measuring the satellite positioning information.

Step S603': Measurement gap configuration information is sent to the user equipment.

The measurement gap indicated by the measurement gap configuration information satisfies the configuration information required for measuring the satellite positioning information.

The measurement gap is used for the UE to perform GNSS measurement within the gap to obtain GNSS positioning information. For details, please refer to the descriptions in other embodiments of the present disclosure.

Optionally, the method includes steps S601, S602' and S603".

Step S601: Measurement capability information sent by a user equipment is received.

The user equipment measurement capability information is used for indicating whether a first capability is supported, and the first capability is: measuring satellite positioning information in a radio resource control (RRC) connected state.

Step S602': Configuration information required for measuring the satellite positioning information is received.

The configuration information required for measuring satellite positioning information includes at least one of:
a duration for measuring the satellite positioning information, a measurement repetition period for measuring the satellite positioning information, or an offset of a measurement start time point for measuring the satellite positioning information.

Step S603": Discontinuous reception configuration information is sent to the user equipment.

The off period indicated by the discontinuous reception configuration information satisfies the configuration information required for measuring the satellite positioning information. The off period in the discontinuous reception (DRX) configuration information configured by the network device (DRX off period) is used for performing GNSS measurement to obtain GNSS positioning information. For details, please refer to the description in other embodiments of the present disclosure.

Based on the same concept as the above method embodiments, an embodiment of the present disclosure also provides an electronic device, which may have the function of the user equipment 102 in the above method embodiments, and is used to execute the steps performed by the user equipment 102 provided in the above embodiments. The function can be implemented by hardware, or by software or hardware executing corresponding software. The hardware or software includes one or more modules corresponding to the above functions.

In a possible implementation, the electronic device 700 shown in Fig. 7 may serve as the user equipment 102 involved in the above method embodiments, and execute the steps executed by the user equipment 102 in the above method embodiments.

The communication apparatus 700 includes a transceiver module 701 and a processing module 702.

The transceiver module 701 is configured to send user equipment measurement capability information to a network device, in which the user equipment measurement capability information is used for indicating whether a first capability is supported, and the first capability is: measuring satellite positioning information in a radio resource control (RRC) connected state.

In some possible implementations, the transceiver module 701 is further configured to send a message for triggering an entry into an RRC idle state to the network device in response to the user equipment measurement capability information indicating that the first capability is not supported.

The processing module 702 is configured to measure satellite positioning information in the RRC idle state.

In some possible implementations, the message for triggering the entry into the RRC idle state is a radio link failure message.

The transceiver module 701 is further configured to send an RRC reconnection request to the network device after measuring the satellite positioning information in the RRC idle state.

In some possible implementations, the message for triggering the entry into the RRC idle state is an RRC connection release request;
the transceiver module 701 is further configured to send an RRC connection establishment request to the network device after measuring the satellite positioning information in the RRC idle state.

In some possible implementations, the transceiver module 701 is further configured to send configuration information required for measuring satellite positioning information to the network device in response to the user equipment measurement capability information indicating that the first capability is supported; the configuration information required for measuring the satellite positioning information includes at least one of: a duration for measuring the satellite positioning information, a measurement repetition period for measuring the satellite positioning information, or an offset of a measurement start time point for measuring the satellite positioning information.

In some possible implementations, the transceiver module 701 is further configured to receive measurement gap configuration information sent by the network device, in which a measurement gap indicated by the measurement gap configuration information satisfies the configuration information required for measuring the satellite positioning information;
the processing module 702 is further configured to measuring the satellite positioning information within the measurement gap indicated by the measurement gap configuration information.

In some possible implementations, the transceiver module 701 is further configured to receive discontinuous reception configuration information sent by the network device, in which an off period indicated by the discontinuous reception configuration information satisfies the configuration information required for measuring the satellite positioning information;
the processing module 702 is further configured to measure satellite positioning information during the off period indicated by the discontinuous reception configuration information.

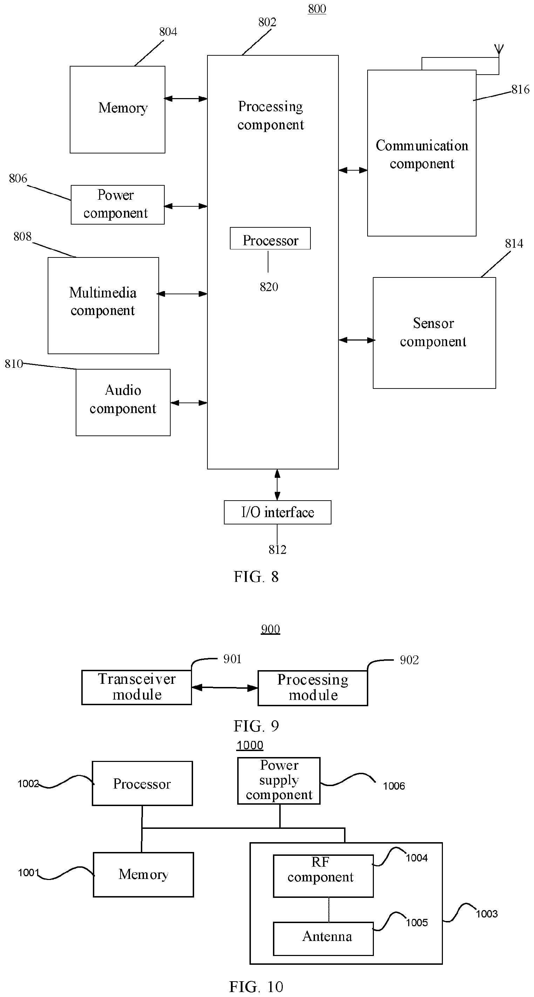

When the communication apparatus is the user equipment 102, its structure may also be as shown in Fig. 8. For example, apparatus 800 may be a mobile phone, a computer, a digital broadcast terminal, a message sending and receiving device, a game console, a tablet device, a medical device, a fitness device, a personal digital assistant, etc.

Referring to Fig. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the apparatus 800, such as operations associated with display, phone calls, data communications, camera operations, and recording operations. The processing component 802 may include one or more processors 820 to execute instructions to complete all or part of the steps of the above-mentioned methods. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations of the apparatus 800. Examples of such data include instructions for any application or method operating on the apparatus 800, contact data, phone book data, messages, pictures, videos, etc. The memory 804 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disc.

The power component 806 provides power to the various components of the apparatus 800. The power component 806 may include a power management system, one or more power supplies, and other components associated with generating, managing, and distributing power for the apparatus 800.

The multimedia component 808 includes a screen that provides an output interface between the apparatus 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to detect touch, swipe, and gestures on the touch panel. The touch sensor may not only detect the boundaries of the touch or swipe action, but also detect the duration and pressure associated with the touch or swipe operation. In some embodiments, the multimedia component 808 includes a front camera and/or a rear camera. When the apparatus 800 is in an operating mode, such as a photographing mode or a video mode, the front camera and/or the rear camera may receive external multimedia data. Each of the front camera and rear camera may be a fixed optical lens system or have a focal length and optical zoom capability.

The audio component 810 is configured to output and/or input audio signals. For example, the audio component 810 includes a microphone (MIC), and when the apparatus 800 is in an operating mode, such as a phone call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and peripheral interface modules. The peripheral interface modules are such as keyboards, click wheels, or buttons. These buttons may include but are not limited to: home button, volume button, start button, and lock button.

The sensor component 814 includes one or more sensors for providing status assessment in various aspects for the apparatus 800. For example, the sensor component 814 can detect the on/off state of the apparatus 800, the relative positioning of components, e.g., the components are the display and keypad of the apparatus 800, and the sensor component 814 can also detect the position change of the apparatus 800 or a component of the apparatus 800, the presence or absence of user contact with the apparatus 800, the orientation or acceleration/deceleration of the apparatus 800, and the temperature change of the apparatus 800. The sensor component 814 may include a proximity sensor configured to detect the presence of nearby objects when there is no physical contact. The sensor component 814 may also include an optical sensor, such as a CMOS or CCD image sensor, for imaging applications. In some embodiments, the sensor component 814 may also include an accelerometer, a gyroscope, a magnetic sensor, a pressure sensor, or a temperature sensor.

The communication component 816 is configured to facilitate wired or wireless communication between the apparatus 800 and other devices. The apparatus 800 can access a wireless network based on a communication standard, such as WiFi, 4G or 5G, or a combination thereof. In an exemplary embodiment, the communication component 816 receives a broadcast signal or broadcast-related information from an external broadcast management system via a broadcast channel. In an exemplary embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the apparatus 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, to perform the above methods.

In an exemplary embodiment, a non-transitory computer-readable storage medium including instructions is also provided, such as a memory 804 including instructions, and the instructions can be executed by a processor 820 of the apparatus 800 to perform the above methods. For example, the non-transitory computer-readable storage medium can be a ROM, a random access memory (RAM), a compact disk read-only memory (CD-ROM), a magnetic tape, a floppy disk, an optical data storage device, etc.

Based on the same concept as the above method embodiments, the embodiment of the present disclosure also provides a communication apparatus, which can have the functions of the network device 101 in the above method embodiments, and is used to execute the steps performed by the network device 101 provided in the above embodiments. The function can be implemented by hardware, or by software or hardware executing corresponding software. The hardware or software includes one or more modules corresponding to the above functions.

In a possible implementation, the communication apparatus 900 shown in Fig. 9 may serve as the network device 101 involved in the above method embodiments, and execute the steps executed by the network device 101 in the above method embodiments.

The communication apparatus 900 as shown in Fig. 9 includes a transceiver module 901 and a processing module 902.

The transceiver module 901 is configured to receive user equipment measurement capability information sent by a user equipment, in which the user equipment measurement capability information is used for indicating whether a first capability is supported, and the first capability is: measuring satellite positioning information in a radio resource control (RRC) connected state.

In a possible implementation, the transceiver module 901 is further configured to receive a message sent by the user equipment for triggering an entry into the RRC idle state in response to the user equipment measurement capability information indicating that the first capability is not supported.

In a possible implementation, the message for triggering the entry into the RRC idle state is a radio link failure message; the transceiver module 901 is further configured to receive an RRC reconnection request.

In a possible implementation, the message for triggering the entry into the RRC idle state is an RRC connection release request; the transceiver module 901 is further configured to receive the RRC connection establishment request sent by the user equipment.

In a possible implementation, the transceiver module 901 is further configured to, in response to the user equipment measurement capability information indicating that the first capability is supported, receive, from the user equipment, configuration information required for measuring the satellite positioning information; the configuration information required for measuring the satellite positioning information includes at least one of:
a duration for measuring the satellite positioning information, a measurement repetition period for measuring the satellite positioning information, or an offset of a measurement start time point for measuring the satellite positioning information.

In a possible implementation, the transceiver module 901 is further configured to receive measurement gap configuration information sent by the network device, in which a measurement gap indicated by the measurement gap configuration information satisfies the configuration information required for measuring the satellite positioning information.

In a possible implementation, the transceiver module 901 is further configured to receive discontinuous reception configuration information sent by the network device, in which an off period indicated by the measurement gap configuration information satisfies the configuration information required for measuring the satellite positioning information.

When the communication apparatus is the network device 101, its structure can also be as shown in Fig. 10. As shown in Fig. 10, the apparatus 1000 includes a memory 1001, a processor 1002, a transceiver component 1003, and a power supply component 1006. The memory 1001 is coupled to the processor 1002, and can be used to store programs and data necessary for the communication apparatus 1000 to implement various functions. The processor 1002 is configured to support the communication apparatus 1000 to perform the corresponding function in the above method, and the function can be implemented by calling the program stored in the memory 1001. The transceiver component 1003 can be a wireless transceiver, which can be used to support the communication apparatus 1000 to receive signaling and/or data through a wireless air interface, and send signaling and/or data. The transceiver component 1003 may also be referred to as a transceiver unit or a communication unit. The transceiver component 1003 may include a radio frequency component 1004 and one or more antennas 1005, in which the radio frequency component 1004 may be a remote radio unit (RRU), which may be specifically used for transmission of radio frequency signals and conversion of radio frequency signals into baseband signals and vice versa, and the one or more antennas 1005 may be specifically used for transmitting and reception of radio frequency signals.

When the communication apparatus 1000 needs to send data, the processor 1002 can perform baseband processing on the data to be sent, and then output the baseband signal to the radio frequency (RF) unit. The RF unit performs RF processing on the baseband signal and then sends the RF signal in the form of electromagnetic waves through the antenna. When data is sent to the communication apparatus 1000, the RF unit receives the RF signal through the antenna, converts the RF signal into a baseband signal, and outputs the baseband signal to the processor 1002. The processor 1002 converts the baseband signal into data and processes the data.

Those skilled in the art will readily appreciate other implementations of the embodiments of the present disclosure after considering the specification and practicing the invention disclosed herein. This application is intended to cover any variations, uses, or adaptations of the embodiments of the present disclosure, which follow the general principles of the embodiments of the present disclosure and include common knowledge or customary technical means in the art that are not disclosed in the present disclosure. The specification and examples are to be considered as exemplary only, and the true scope and spirit of the embodiments of the present disclosure are indicated by the appended claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

### Industrial Applicability

The user equipment reports user equipment measurement capability information to the network device, to indicate whether the user equipment supports the ability to measure satellite positioning information in the radio resource control (RRC) connected state. After the network device learns whether the user equipment has this capability, the network device causes the user equipment to apply its capabilities according to different situations, so as to avoid the connection interruption due to returning to the RRC idle state to measure satellite positioning information in the case that this capability is supported, thereby improving resource utilization and network performance.

## Claims

1. A method for user equipment (UE) measurement capability transmission, performed by a UE, comprising:
sending UE measurement capability information to a network device, wherein the UE measurement capability information is configured for indicating whether a first capability is supported, and the first capability is: measuring satellite positioning information in a radio resource control (RRC) connected state.

2. The method according to claim 1, further comprising:
in response to the UE measurement capability information indicating that the first capability is not supported, sending a message for triggering an entry into an RRC idle state to the network device and measuring satellite positioning information in the RRC idle state.

3. The method according to claim 2, wherein the message for triggering the entry into the RRC idle state is a radio link failure message; and
the method further comprises: sending an RRC reconnection request to the network device after measuring the satellite positioning information in the RRC idle state.

4. The method according to claim 2, wherein the message for triggering the entry into the RRC idle state is an RRC connection release request; and
the method further comprises: sending an RRC connection establishment request to the network device after measuring the satellite positioning information in the RRC idle state.

5. The method according to claim 1, further comprising:
sending configuration information required for measuring the satellite positioning information to the network device in response to the UE measurement capability information indicating that the first capability is supported, wherein the configuration information required for measuring the satellite positioning information comprises at least one of:
a duration for measuring the satellite positioning information, a measurement repetition period for measuring the satellite positioning information, or an offset of a measurement start time point for measuring the satellite positioning information.

6. The method according to claim 5, further comprising:
receiving measurement gap configuration information sent by the network device, wherein a measurement gap indicated by the measurement gap configuration information satisfies the configuration information required for measuring the satellite positioning information; and
measuring the satellite positioning information within the measurement gap indicated by the measurement gap configuration information.

7. The method according to claim 5, further comprising:
receiving discontinuous reception configuration information sent by the network device, wherein an off period indicated by the discontinuous reception configuration information satisfies the configuration information required for measuring the satellite positioning information; and
measuring the satellite positioning information during the off period indicated by the discontinuous reception configuration information.

8. A method for measuring satellite positioning information, performed by a network device, comprising:
receiving user equipment (UE) measurement capability information sent by a UE, wherein the UE measurement capability information is configured for indicating whether a first capability is supported, and the first capability is: measuring satellite positioning information in a radio resource control RRC connected state.

9. The method according to claim 8, further comprising:
receiving a message for triggering an entry into an RRC idle state sent by the UE in response to the UE measurement capability information indicating that the first capability is not supported.

10. The method according to claim 9, wherein the message for triggering the entry into the RRC idle state is a radio link failure message; and
the method further comprises: receiving an RRC reconnection request.

11. The method according to claim 9, wherein the message for triggering the entry into the RRC idle state is an RRC connection release request; and
the method further comprises: receiving an RRC connection establishment request sent by the UE.

12. The method according to claim 8, further comprising:
receiving, from the UE, configuration information required for measuring the satellite positioning information in response to the UE measurement capability information indicating that the first capability is supported, wherein the configuration information required for measuring the satellite positioning information comprises at least one of:
a duration for measuring the satellite positioning information, a measurement repetition period for measuring the satellite positioning information, or an offset of a measurement start time point for measuring the satellite positioning information.

13. The method according to claim 12, further comprising:
receiving measurement gap configuration information sent by the UE, wherein a measurement gap indicated by the measurement gap configuration information satisfies the configuration information required for measuring the satellite positioning information.

14. The method according to claim 12, further comprising:
receiving discontinuous reception configuration information sent by the UE, wherein an off period indicated by the measurement gap configuration information satisfies the configuration information required for measuring the satellite positioning information.

15. An apparatus for measuring satellite positioning information, configured in a user equipment (UE), comprising:
a transceiver module, configured to send UE measurement capability information to a network device, wherein the UE measurement capability information is used for indicating whether a first capability is supported, and the first capability is: measuring satellite positioning information in a radio resource control RRC connected state.

16. An apparatus for measuring satellite positioning information, configured in a network device, comprising:
a transceiver module, configured to receive user equipment (UE) measurement capability information sent by a UE, wherein the UE measurement capability information is used for indicating whether a first capability is supported, and the first capability is: measuring satellite positioning information in a radio resource control RRC connected state.

17. A communication apparatus, comprising a processor and a memory, wherein,
the memory is configured to store a computer program;
the processor is configured to execute the computer program to implement the method according to any one of claims 1 to 7.

18. A communication apparatus, comprising a processor and a memory, wherein,
the memory is configured to store a computer program;
the processor is configured to execute the computer program to implement the method according to any one of claims 8 to 14.

19. A computer-readable storage medium storing instructions, wherein the instructions, when called and executed by a computer, cause the computer to execute the method according to any one of claims 1 to 7.

20. A computer-readable storage medium storing instructions, wherein the instructions, when called and executed by a computer, cause the computer to execute the method according to any one of claims 8 to 14.
